# FASCICULE DE BREVET EUROPEEN

(11) **EP 1 630 077 B1**
(45) Date de publication et mention de la délivrance du brevet: **23.01.2008**
(21) Numéro de dépôt: 05291711.9
(22) Date de dépôt: 10.08.2005
(51) Int. Cl.: B62D 25/14

(54) **Traverse de planche de bord**
Instrumententafel-Querträger
Dashboard crossbeam

(30) Priorité: 30.08.2004 FR 0409197
(43) Date de publication de la demande: 01.03.2006
(73) Titulaire: Wagon Automotive S.A., 78306 Poissy (FR)
(72) Inventeur: Trancart, Olivier, 78790 Courgent (FR)
(74) Mandataire: Blot, Philippe Robert Emile

(56) Documents cités:
- DE-A- 10 057 181
- FR-A- 2 791 314
- US-A1- 2003 084 948
- US-B1- 6 382 695

## Description

La présente invention concerne une traverse de planche de bord d'un véhicule, du type indiqué dans le préambule de la revendication 1.

Elle s'applique notamment aux planches de bord des véhicules automobiles.

On connaît des planches de bord de véhicules automobiles qui comprennent une traverse en acier pour fixer la planche de bord à la caisse. La traverse comprend une barre transversale et, à chaque extrémité, une bride de fixation de la barre à la caisse du véhicule. La traverse comprend en outre des brides de support fixées dans la partie courante de la barre transversale. Ces brides forment des supports pour différents composants, tels que la colonne de direction ou la boîte à gants.

Le document FR2791314 divulgue une traverse avec une barre transversale et au moins une bride de liaison fabriquées en des matières différentes, la bride étant en un alliage à base de magnésium.

La traverse connue a une masse importante et des mauvaises propriétés d'amortissement de vibrations. Par ailleurs, les brides sont difficiles à fabriquer.

On connaît en outre des traverses de planche de bord moulées intégralement en un alliage de magnésium. Une telle traverse comprend des brides de fixation et des brides de support formées d'une seule pièce avec la traverse. Ces traverses ont un coût important, dû à la grande quantité de magnésium nécessaire et dû à la complexité du moule.

La présente invention a pour but de proposer une traverse de planche de bord qui soit légère et économique, tout en ayant de bonnes propriétés d'amortissement de vibrations.

A cet effet, l'invention a pour objet une traverse de planche de bord du type précité, caractérisée par la partie caractérisante de la revendication 1.

Selon des modes particuliers de réalisation, la traverse selon l'invention comporte l'une ou plusieurs des caractéristiques indiquées dans les revendications dépendantes.

L'invention a en outre pour objet un véhicule comprenant une caisse et une traverse de planche de bord, caractérisé en ce que la traverse de planche de bord est une traverse telle que définie ci-dessus, et en ce que la barre transversale est fixée à la caisse par au moins une bride de liaison.

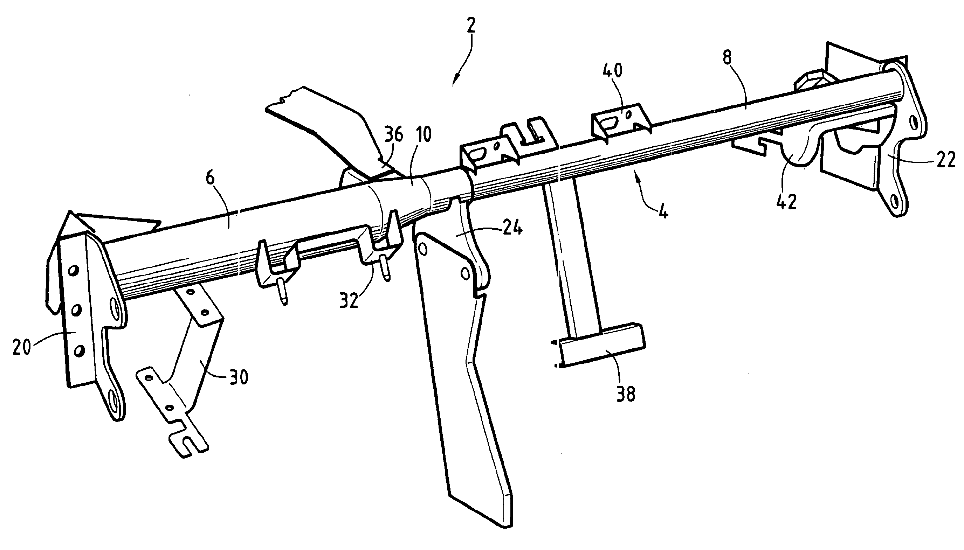

L'invention sera mieux comprise à la lecture de la description qui va suivre, donnée uniquement à titre d'exemple et faite en se référant au dessin annexé, sur lequel la Figure unique est une vue en perspective d'une traverse de planche de bord selon l'invention.

La traverse de planche de bord 2 d'un véhicule automobile comprend une barre transversale 4 qui s'étend à l'état monté transversalement à la direction de marche du véhicule et sensiblement sur toute la largeur de celui-ci.

La barre 4 comprend deux tronçons successifs 6, 8, dont chacun est constitué d'un profilé extrudé à section transversale circulaire. Le tronçon 6 est situé, à l'état monté, du côté conducteur tandis que le tronçon 8 est situé, à l'état monté, du côté passager. Le tronçon 6 a une section transversale supérieure à la section transversale du tronçon 8. Le tronçon 6 comprend une partie 10 de liaison au tronçon 8, partie dont la section transversale diminue progressivement vers l'extrémité dirigée vers le tronçon 8.

La traverse 2 comprend en outre trois brides de liaison 20, 22, 24 par lesquelles la barre 4 est fixée à la caisse (non représentée) du véhicule. Chacune des brides 20, 22 est fixée à l'une des extrémités de la barre transversale 4, tandis que la bride 26 est fixée dans la partie courante de la barre transversale 4.

La traverse 2 comprend par ailleurs des brides de liaison formant support de composants du véhicule automobile. Ces supports sont un support de boîte à fusibles 30, un support de colonne de direction 32, un support de tirant 36 qui est destiné à être fixé à une partie avant d'un châssis de véhicule, un support de radio 38, un support d'une unité de ventilation 40 et un support de boîte à gants 42. Les supports 30 à 42 sont situés dans la partie courante de la barre 4, entre les extrémités de celle-ci.

Les brides de fixation 20, 22, 24 et les supports 30 à 42 sont vissés ou rivetés sur la barre transversale 4, ce qui permet de supprimer des opérations de soudage.

La barre transversale 4 est fabriquée en une matière qui a une densité supérieure à la densité de la matière des brides de fixation 20, 22, 24 et des supports 30 à 42. La barre 4 est en acier, par exemple en un acier standard carbone.

Les brides de fixation 20, 22, 24 et les supports 30 à 42 sont fabriqués en un alliage à base de magnésium, comprenant au moins 90% en poids de magnésium, et de préférence au moins 95% en poids de magnésium. Un alliage particulièrement adapté est AM60HP.

Le fait que les brides de fixation 20, 22, 24 sont en un alliage à base de magnésium permet d'amortir la transmission des vibrations du châssis sur la planche de bord. Ainsi, d'autres éléments d'amortissement de vibration disposés entre la traverse 2 et le châssis peuvent être supprimés. Le fait que les supports 30 à 42 soient en un alliage à base de magnésium permet d'amortir les vibrations des composants fixés à ces supports. Les brides 20, 22, 24 et les supports 30 à 42 ont par ailleurs un poids faible et une grande résistance aux chocs.

La barre 4 étant un profilé en acier, la traverse 2 est économique à fabriquer.

La combinaison d'une barre transversale en acier et des brides de liaison en alliage à base de magnésium selon l'invention procure les autres avantages suivants. La traverse utilise peu de magnésium et est donc économique. Les pièces en alliage à base de magnésium ont des tailles faibles et peuvent être moulées avec une grande cadence. Les moules des pièces à base de magnésium ont une longue durée de vie.

Un support peut éventuellement supporter plusieurs composants.

En variante, la barre transversale 4 est constituée d'un profilé en acier d'une seule pièce. La barre transversale 4 peut être fabriquée en une matière autre que de l'acier, par exemple en un alliage à base de titane.

En variante encore, la barre transversale 4 a une section transversale non circulaire, de préférence quadrilatère, et notamment carré.

## Revendications

1. Traverse de planche de bord d'un véhicule, du type comprenant une barre transversale (4), et au moins une bride de liaison (20, 22, 24, 30, 32, 36, 38, 40, 42) solidaire de la barre, la barre transversale (4) et la bride de liaison (20, 22, 24, 30, 32, 36, 38, 40, 42) étant fabriquées en des matières différentes, et la bride de liaison (20, 22, 30, 32, 36, 38, 40, 42) étant en un alliage à base de magnésium comprenant au moins 90% de magnésium, **caractérisée en ce qu'**au moins une bride de liaison (20, 22, 24, 30, 32, 36, 38, 40, 42) est une pièce moulée et **en ce que** la barre transversale (4) comprend deux tronçons (6, 8) ayant des sections transversales différentes, notamment de taille différente.

2. Traverse de planche de bord suivant la revendication 1, **caractérisée en ce qu'**au moins une bride de liaison est une bride de fixation (20, 22, 24) de la barre transversale (4) à une caisse du véhicule, la bride de fixation (20, 22) étant disposée à une extrémité de la barre transversale (4).

3. Traverse de planche de bord suivant la revendication 1 ou 2, **caractérisée en ce qu'**au moins une bride de liaison est un support (30, 32, 36, 38, 40, 42) d'un composant du véhicule automobile à la traverse, et est notamment située entre des extrémités de la barre transversale (4).

4. Traverse de planche de bord suivant l'une quelconque des revendications 1 à 3, **caractérisée en ce qu'**au moins une bride de liaison (20, 22, 24, 30, 32, 36, 38, 40, 42) est fixée à la barre transversale (4) par vissage ou rivetage.

5. Traverse de planche de bord suivant l'une quelconque des revendications 1 à 4, **caractérisée en ce que** la barre transversale (4) comprend un profilé, notamment extrudé.

6. Traverse de planche de bord suivant la revendication 5, **caractérisée en ce que** la barre transversale (4) est constituée d'un profilé.

7. Traverse de planche de bord suivant l'une quelconque des revendications 1 à 6, **caractérisée en ce que** la barre transversale (4) est en une matière ayant une densité supérieure à la densité de l'alliage à base de magnésium de la bride de liaison (20, 22, 24, 30, 32, 36, 38, 40, 42).

8. Traverse de planche de bord suivant la revendication 7, **caractérisée en ce que** la matière de la barre transversale (4) est de l'acier.

9. Véhicule comprenant une caisse et une traverse de planche de bord (2), **caractérisé en ce que** la traverse de planche de bord est une traverse selon l'une des revendications 1 à 8, et **en ce que** la barre transversale (4) est fixée à la caisse par au moins une bride de liaison (20, 22, 24).

## Claims

1. Cross member for a vehicle dashboard, of the type comprising a transverse bar (4), and at least one connecting flange (20, 22, 24, 30, 32, 36, 38, 40, 42) fixedly attached to the bar, the transverse bar (4) and the connecting flange (20, 22, 24, 30, 32, 36, 38, 40, 42) being made of different materials, and the connecting flange (20, 22, 30, 32, 36, 38, 40, 42) being made of a magnesium-based alloy containing at least 90% magnesium, **characterised in that** at least one connecting flange (20, 22, 24, 30, 32, 36, 38, 40, 42) is a moulded part and **in that** the transverse bar (4) comprises two sections (6, 8) with different cross-sections, notably of different sizes.

2. Dashboard cross member according to claim 1, **characterised in that** at least one connecting flange is a flange (20, 22, 24) for attaching the transverse bar (4) to the body of the vehicle, the attachment flange (20, 22) being disposed at one end of the transverse bar (4),

3. Dashboard cross member according to claim 1 or 2, **characterised in that** at least one connecting flange is a support (30, 32, 36, 38, 40, 42) for a component of the motor vehicle on the cross member, and is located, in particular, between the ends of the transverse bar.

4. Dashboard cross member according to any one of claims 1 to 3, **characterised in that** at least one connecting flange (20, 22, 24, 30, 32, 36, 38, 40, 42) is fixed to the transverse bar (4) by screwing or riveting.

5. Dashboard cross member according to any one of claims 1 to 4, **characterised in that** the transverse bar (4) comprises an, in particular, extruded profile.

6. Dashboard cross member according to claim 5, **characterised in that** the transverse bar (4) consists of a profile.

7. Dashboard cross member according to any one of claims 1 to 6, **characterised in that** the transverse bar (4) is made of a material the density of which is higher than the density of the magnesium-based alloy of the connecting flange (20, 22, 24, 30, 32, 36, 38, 40, 42).

8. Dashboard cross member according to claim 7, **characterised in that** the material of the transverse bar (4) is steel.

9. Vehicle comprising a body and a dashboard cross member (2), **characterised in that** the dashboard cross member is a cross member according to one of claims 1 to 8, and **in that** the transverse bar (4) is fixed to the body by at least one connecting flange (20, 22, 24).

## Patentansprüche

1. Armaturenbrett-Querträger eines Fahrzeugs, umfassend eine Querstange (4) und mindestens einen mit der Stange fest verbundenen Verbindungsflansch (20, 22, 24, 30, 32, 36, 38, 40, 42), wobei die Querstange (4) und der Verbindungsflansch (20, 22, 24, 30, 32, 36, 38, 40, 42) aus verschiedenen Werkstoffen hergestellt sind und der Verbindungsflansch (20, 22, 24, 30, 32, 36, 38, 40, 42) aus einer Legierung auf Magnesiumbasis besteht, die mindestens 90% Magnesium umfasst, **dadurch gekennzeichnet, dass** mindestens ein Verbindungsflansch (20, 22, 24, 30, 32, 36, 38, 40, 42) ein Gussteil ist und dass die Querstange (4) zwei Abschnitte (6, 8) mit verschiedenen Querschnitten, insbesondere von verschiedener Größe, umfasst.

2. Armaturenbrett-Querträger nach Anspruch 1, **dadurch gekennzeichnet, dass** mindestens ein Verbindungsflansch ein Flansch (20, 22, 24) zur Befestigung der Querstange (4) an einer Karosserie des Fahrzeugs ist, wobei der Befestigungsflansch (20, 22) an einem Ende der Querstange (4) angeordnet ist.

3. Armaturenbrett-Querträger nach Anspruch 1 oder 2, **dadurch gekennzeichnet, dass** mindestens ein Verbindungsflansch ein Halter (30, 32, 36, 38, 40, 42) eines Bauelements des Kraftfahrzeugs an dem Querträger ist und insbesondere zwischen Enden der Querstange (4) gelegen ist.

4. Armaturenbrett-Querträger nach einem der Ansprüche 1 bis 3, **dadurch gekennzeichnet, dass** mindestens ein Verbindungsflansch (20, 22, 24, 30, 32, 36, 38, 40, 42) an der Querstange (4) durch Verschraubung oder Vernietung befestigt ist.

5. Armaturenbrett-Querträger nach einem der Ansprüche 1 bis 4, **dadurch gekennzeichnet, dass** die Querstange (4) ein insbesondere extrudiertes Profilteil umfasst.

6. Armaturenbrett-Querträger nach Anspruch 5, **dadurch gekennzeichnet, dass** die Querstange (4) aus einem Profilteil besteht.

7. Armaturenbrett-Querträger nach einem der Ansprüche 1 bis 6, **dadurch gekennzeichnet, dass** die Querstange (4) aus einem Werkstoff mit einer Dichte besteht, die höher als die Dichte der Legierung auf Magnesiumbasis des Verbindungsflansches (20, 22, 24, 30, 32, 36, 38, 40, 42) ist.

8. Armaturenbrett-Querträger nach Anspruch 7, **dadurch gekennzeichnet, dass** der Werkstoff der Querstange (7) Stahl ist.

9. Fahrzeug, umfassend eine Karosserie und einen Armaturenbrett-Querträger (2), **dadurch gekennzeichnet, dass** der Armaturenbrett-Querträger ein Querträger nach einem der Ansprüche 1 bis 8 ist und dass die Querstange (4) an der Karosserie durch mindestens einen Verbindungsflansch (20, 22, 24) befestigt ist.
